(19) Europäisches Patentamt
European Patent Office
Office européen des brevets

(11) **EP 3 504 788 B1**

(12) **EUROPÄISCHE PATENTSCHRIFT**

(45) Veröffentlichungstag und Bekanntmachung des Hinweises auf die Patenterteilung:
**29.07.2020 Patentblatt 2020/31**

(21) Anmeldenummer: **17777506.1**

(22) Anmeldetag: **18.09.2017**

(51) Int Cl.:
*H02P 27/06* (2006.01)      *H02P 23/04* (2006.01)
*H02P 6/10* (2006.01)

(86) Internationale Anmeldenummer:
**PCT/EP2017/073392**

(87) Internationale Veröffentlichungsnummer:
**WO 2018/068988 (19.04.2018 Gazette 2018/16)**

(54) **BETREIBEN EINES UMRICHTERS ZUM KOPPELN EINER FÜR EINEN BETRIEB AN WECHSELSPANNUNG AUSGEBILDETEN ELEKTRISCHEN MASCHINE MIT EINEM WECHSELSPANNUNGSNETZ**

OPERATION OF A CONVERTER FOR COUPLING AN ELECTRICAL MACHINE DESIGNED FOR OPERATION ON AC VOLTAGE WITH AC VOLTAGE POWER

FONCTIONNEMENT D'UN CONVERTISSEUR DESTINÉ À COUPLER UNE MACHINE ÉLECTRIQUE CONÇUE POUR UN FONCTIONNEMENT EN TENSION ALTERNATIVE À UN RÉSEAU DE TENSION ALTERNATIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.10.2016 EP 16193303**

(43) Veröffentlichungstag der Anmeldung:
**03.07.2019 Patentblatt 2019/27**

(73) Patentinhaber: **Siemens Aktiengesellschaft 80333 München (DE)**

(72) Erfinder:
- **HILSCHER, Martin**
  **91056 Erlangen (DE)**
- **KALBFLEISCH, Peter**
  **90587 Obermichelbach (DE)**
- **ZUROWSKI, Rainer**
  **91301 Forchheim (DE)**

(56) Entgegenhaltungen:
DE-A1- 1 806 769          DE-A1- 19 756 955
DE-A1-102004 030 974      DE-A1-102011 079 995

**Beschreibung**

Die Erfindung betrifft ein Verfahren zum Betreiben eines Umrichters zum Koppeln einer für einen Betrieb an Wechselspannung ausgebildeten elektrischen Maschine mit einem Wechselspannungsnetz, bei dem ein an das Wechselspannungsnetz angeschlossener netzseitiger Wechselrichter des Umrichters mittels eines Gleichstromzwischenkreises mit einem an die elektrische Maschine angeschlossenen maschinenseitigen Wechselrichter des Umrichters elektrisch gekoppelt wird, wobei ein Wandeln von elektrischer Energie durch den netzseitigen Wechselrichter mittels eines Netzsteuersignals und ein Wandeln von elektrischer Energie durch den maschinenseitigen Wechselrichter mittels eines Maschinensteuersignals der Steuereinheit gesteuert wird. Darüber hinaus umfasst die Erfindung ein Rechnerprogrammprodukt. Schließlich umfasst die Erfindung auch eine Steuereinheit zum Betreiben eines Umrichters zum Koppeln einer für einen Betrieb an Wechselspannung ausgebildeten elektrischen Maschine mit einem Wechselspannungsnetz, zu welchem Zweck der Umrichter einen an das Wechselspannungsnetz angeschlossenen netzseitigen Wechselrichter und einen an die elektrische Maschine angeschlossenen maschinenseitigen Wechselrichter aufweist, die zum elektrischen Koppeln an einen Gleichstromzwischenkreis angeschlossen sind, wobei die Steuereinheit einen netzseitigen Anschluss zum Anschließen an den netzseitigen Wechselrichter aufweist und ausgebildet ist, am netzseitigen Anschluss ein Netzsteuersignal zum Steuern des netzseitigen Wechselrichters bereitzustellen, und wobei die Steuereinheit einen maschinenseitigen Anschluss zum Anschließen an den maschinenseitigen Wechselrichter aufweist und ausgebildet ist, am maschinenseitigen Anschluss ein Maschinensteuersignal zum Steuern des maschinenseitigen Wechselrichters bereitzustellen.

Erfindungsgemäße Verfahren zum Betreiben derartiger Umrichter sowie Steuereinheiten zu deren Steuerung sind im Stand der Technik bekannt, beispielsweise aus der DE 10 2000 11079 995 A1, die ein Verfahren zum Betrieb einer Antriebseinheit offenbart. Umrichter der gattungsgemäßen Art dienen dazu, eine oder mehrere elektrische Maschinen, insbesondere rotierende elektrische Maschinen mit dem Wechselspannungsnetz, insbesondere einem mehrphasigen, vorzugsweise einem dreiphasigen, Wechselspannungsnetz zu koppeln. Üblicherweise werden solche Umrichter bei großen Leistungen eingesetzt, beispielsweise einem oder mehreren MW oder mehr. Bei derart großen Leistungen ergeben sich besondere Anforderungen, weil der Betrieb der elektrischen Maschine über den Umrichter zu Wechselwirkungen mit dem Wechselspannungsnetz führen kann. Da die elektrische Maschine in der Regel für den Betrieb mit Wechselspannung bzw. Wechselstrom ausgebildet ist, ist es erforderlich, dass der Umrichter eine energietechnische Kopplung zwischen der Wechselspannung bzw. einem Wechselstrom auf der Netzseite und einer Wechselspannung bzw. einem Wechselstrom auf der Maschinenseite herstellt. Zu diesem Zweck ist der netzseitige Wechselrichter vorgesehen, der mit seiner Wechselspannungs- bzw. Wechselstromseite an das Wechselspannungsnetz und mit seiner Gleichstromseite an den Gleichstromzwischenkreis angeschlossen ist. Darüber hinaus umfasst der Umrichter den zweiten maschinenseitigen Umrichter, der gleichstromseitig an den Gleichstromzwischenkreis und wechselspannungsseitig bzw. wechselstromseitig an die elektrische Maschine angeschlossen ist. Die beiden Wechselrichter sind somit durch den Gleichstromzwischenkreis elektrisch miteinander gekoppelt, sodass ein Energiefluss vom Wechselspannungsnetz zur elektrischen Maschine und vorzugsweise auch umgekehrt erfolgen kann.

Ein Wechselrichter ist eine elektrische Einrichtung, die der Energiewandlung dient. Der Wechselrichter stellt eine elektrische Kopplung zwischen einer Wechselspannung bzw. einem Wechselstrom auf der einen Seite und einer Gleichspannung bzw. einem Gleichstrom auf der anderen Seite her. Zu diesem Zweck umfasst der Wechselrichter in der Regel eine Mehrzahl von Halbleiterschaltern, die in geeigneter Weise aufgrund eines Steuersignals, nämlich des Netzsignals bzw. des Maschinensignals, gesteuert werden, um in vorgegebener Weise eine Energiewandlung auszuführen. Bei den vorliegend zu wandelnden Leistungen sind als Halbleiterschalter in der Regel Thyristoren vorgesehen. Dem Grunde nach können die Halbleiterschalter jedoch auch durch Transistoren, beispielsweise bipolare Transistoren, Feldeffekttransistoren oder dergleichen, gebildet sein.

Umfasst der Umrichter lediglich den maschinenseitigen und den netzseitigen Wechselrichter, muss die durch einen der Wechselrichter dem Gleichstromzwischenkreis zugeführte elektrische Energie durch den anderen der beiden Wechselrichter wieder abgeführt werden. Die gewandelte Leistung ist somit durch Steuern der beiden Wechselrichter mittels der ihnen zugeordneten Steuersignale der Steuereinheit einzustellen. Als Energiespeicher des Gleichstromzwischenkreises dient eine elektrische Spule mit einer entsprechend der zu speichernden elektrischen Energie gewählten Induktivität.

An der elektrischen Maschine können im bestimmungsgemäßen Betrieb Pendelmomente auftreten, insbesondere Interharmonische Pendelmomente, die dadurch hervorgerufen werden können, dass eine Netzseite und eine Maschinenseite des Umrichters nicht immer vollständig entkoppelt werden können. In der Regel sind die Amplituden der Pendelmomente vergleichsweise klein, häufig kleiner als 2% eines Bemessungsmomentes. Werden jedoch mechanische Eigenfrequenzen der elektrischen Maschine angeregt, beispielsweise Eigenfrequenzen, die kleiner als 50Hz sind, können maschinenseitig deutlich höhere Pendelmomente verursacht werden, insbesondere hohe Pendelmomente, die insbesondere auch kritische Betriebszustände nach sich ziehen können.

Um diese Problematik zu vermeiden, kann vorgesehen sein, dass eine Bemessungsfrequenz und eine Polpaarzahl der elektrischen Maschine für einen stationären Betrieb so gewählt werden, dass kritische Anregungen von Eigenfrequenzen vermieden werden können, beispielsweise unter Nutzung eines Campbell-Diagramms. Diese Maßnahme eignet sich natürlich lediglich für stationär unter festen vorgegebenen Betriebsbedingungen betriebenen elektrischen Maschinen.

Ist hingegen vorgesehen, dass die elektrische Maschine unterschiedliche Betriebszustände einnehmen kann, kann vorgesehen sein, dass sogenannte Ausblendbänder vorgegeben werden, die Frequenzbereiche definieren, die im bestimmungsgemäßen Betrieb nicht stationär angefahren werden können. Auch wenn sich diese Methode bewährt hat, erweist sie sich dennoch insofern als nachteilig, als dass sie unflexibel ist hinsichtlich der Belastung der elektrischen Maschine. Dies erweist sich unter anderem in Bezug auf eine Prozessführung als hinderlich, weil gegebenenfalls erforderliche Betriebszustände nicht stationär betrieben werden können. Ändert sich nämlich eine Belastung oder die Netzfrequenz , kann dies zum Beispiel dazu führen, dass die definierten Frequenzbereiche nicht mehr zu den tatsächlich vorliegenden Eigenfrequenzen passen und damit die zuvor beschriebene Problematik der Pendelmomentanregungen nicht mehr vermieden werden kann.

Eine weitere Möglichkeit besteht darin, tatsächliche Ist-Momente bzw. Ist-Drehmomente mittels geeigneter Sensoren zu erfassen und durch geeignetes Steuern mittels der Steuereinheit zu dämpfen. Ein derartiges Vorgehen ist beispielsweise aus der WO 2006/113230 A1 sowie auch aus der EP 2 073 375 A1 bekannt. Diese Maßnahme hat jedoch den Nachteil, dass Messaufwand hinsichtlich der mechanischen Eigenschaften an der elektrischen Maschine erforderlich ist. Insbesondere bei variierenden Kombinationen von Umrichtern mit elektrischen Maschinen kann dies einen hohen Aufwand nicht nur hinsichtlich konstruktiver Anforderungen, sondern auch hinsichtlich der Realisierung einer geeigneten Steuerung nach sich ziehen.

Das Patentdokument DE 10 2011 079995 A1 offenbart ein Verfahren zum Betreiben eines Umrichters zum Koppeln einer elektrischen AC-Maschine mit einem Wechselspannungsnetz, bei dem ein netzseitiger Wechselrichter über einen DC-Zwischenkreis mit einem maschinenseitigen Wechselrichter elektrisch gekoppelt wird, wobei der netzseitige Wechselrichter durch ein Netzsteuersignal und der maschinenseitige Wechselrichter durch ein Maschinensteuersignal der Steuereinheit gesteuert wird und ein Kompensationssignal zu dem Netzsteuersignal oder dem Maschinensteuersignal überlagert wird, um interharmonische Pendelmomente zu kompensieren.

Das Patentdokument DE 10 2004 030974 A1 offenbart, zur Kompensation interharmonischer Pendelmomente ein Drehmoment ohne Sensor zu ermitteln.

Der Erfindung liegt die Aufgabe zugrunde, ein verbessertes Verfahren zum Betreiben eines Umrichters sowie eine Steuereinheit hierfür anzugeben.

Zur Lösung der Aufgabe werden mit der Erfindung ein Verfahren, ein Rechnerprogrammprodukt sowie eine Steuereinheit gemäß den unabhängigen Ansprüchen vorgeschlagen.

Weitere vorteilhafte Ausgestaltungen ergeben sich anhand von Merkmalen der abhängigen Ansprüche.

Bezüglich eines ordnungsgemäßen Verfahrens wird mit der Erfindung insbesondere vorgeschlagen, dass das Verfahren die Schritte umfasst:

- Ermitteln eines drehmomentbezogenen Maschinenstromanteils aus elektrischen Maschinenströmen der elektrischen Maschine,
- Erfassen eines Ist-Werts für einen magnetischen Fluss,
- Ermitteln eines Ist-Werts eines Maschinendrehmoments der elektrischen Maschine durch Verknüpfen des erfassten magnetischen Flusses mit dem drehmomentbezogenen Maschinenstromanteil,
- Ermitteln einer Drehmomentdifferenz zwischen dem Ist-Wert des Maschinendrehmoments und einem Soll-Wert des Maschinendrehmoments der elektrischen Maschine,
- Filtern der Drehmomentdifferenz mittels eines Bandpassfilters, welches auf eine maschinenseitige Eigenfrequenz abgestimmt ist,
- Ermitteln eines Kompensationssignals durch Verarbeiten eines Filterausgangssignals des Bandpassfilters, und
- Überlagern des Kompensationssignals zu dem Netzsteuersignal und/oder dem Maschinensteuersignal.

Bezüglich eines Rechnerprogrammprodukt wird mit der Erfindung insbesondere vorgeschlagen, dass das Rechnerprogrammprodukt ein Programm für eine Rechnereinheit mit Programmcodeabschnitten eines Programms zum Ausführen der Schritte des Verfahrens gemäß der Erfindung umfasst, wenn das Programm durch die Rechnereinheit ausgeführt wird, so dass die Rechnereinheit wenigstens ein Kompensationssignal zu dem Netzsteuersignal und/oder dem Maschinensteuersignal ermittelt.

Bezüglich einer gattungsgemäßen Steuereinheit wird mit der Erfindung insbesondere vorgeschlagen, dass die Steuereinheit ausgebildet ist

- einen drehmomentbezogenen Maschinenstromanteil aus elektrischen Maschinenströmen der elektrischen Maschine zu ermitteln,

- einen Ist-Wert für einen magnetischen Fluss zu erfassen,

- einen Ist-Wert eines Maschinendrehmoments der elektrischen Maschine durch Verknüpfen des erfassten magnetischen Flusses mit dem drehmomentbezogenen Maschinenstromanteil zu ermitteln,

- eine Drehmomentdifferenz zwischen dem Ist-Wert des Maschinendrehmoments und einem Soll-Wert des Maschinendrehmoments der elektrischen Maschine zu ermitteln,

- die Drehmomentdifferenz mittels eines Bandpassfilters, welches auf eine maschinenseitige Eigenfrequenz abgestimmt ist, zu filtern,

- ein Kompensationssignal durch Verarbeiten eines Filterausgangssignals des Bandpassfilters zu ermitteln, und

- das Kompensationssignal zu dem Netzsteuersignal und/oder dem Maschinensteuersignal zu überlagern.

Die Erfindung basiert auf dem Prinzip, dass durch Modulation eines Aussteuergrades eine Leistung der elektrischen Maschine moduliert werden kann. Durch eine solche Modulation kann die Pendelleistung in der elektrischen Maschine und damit auch ein Pendelmoment im Luftspalt erzeugt werden, mittels dem die Interharmonischen im Luftspaltmoment kompensiert werden können. Insbesondere benötigt die Erfindung nur Größen, die ohnedies umrichterseitig verfügbar sind. Darüber hinaus brauchen keine technischen Daten bezüglich der elektrischen Maschine, insbesondere hinsichtlich ihrer mechanischen Eigenschaften, verfügbar zu sein. Vorzugsweise werden im Wesentlichen keine mechanischen Daten der elektrischen Maschine bzw. des gesamten Wellenstranges benötigt, wohingegen elektrische Maschinendaten in der Regel stets mit den Regelparametern bekannt sind, ausgenommen beispielsweise ein Trägheitsmoment oder eine Eigenfrequenz des Antriebsstrangs, insbesondere Wellenstrangs, der die elektrische Maschine umfassen kann.

Der wirksame magnetische Fluss kann aus erfassten Ausgangsspannungen und Ausgangsströmen des maschinenseitigen Wechselrichters ermittelt werden. Diese elektrischen Größen sind im Umrichter verfügbar. Dadurch kann auch das wirksame Drehmoment der elektrischen Maschine ermittelt werden.

Das Verarbeiten des Filterausgangssignals des Bandpassfilters erfolgt mittels einer Park-Transformation, um eine d-Komponente und eine q-Komponente zu ermitteln, wobei Mittelwerte für die d-Komponente und die q-Komponente ermittelt werden, die Mittelwerte mittels eines PI-Reglers auf null geregelt werden und durch eine inverse Park-Transformation das Kompensationssignal ermittelt wird. Auf diese Weise lässt sich mit geringem Aufwand das Kompensationssignal aus dem Filterausgangssignals Bandpassfilters ermitteln. Besonders vorteilhaft lässt sich diese Ausgestaltung dann anwenden, wenn es sich um eine mehrpulsige elektrische Maschine handelt, beispielsweise eine 6-pulsige oder eine 12-pulsige elektrische Maschine, oder dergleichen. Dadurch kann die Verfahrensführung in Bezug auf das Steuern des Umrichters deutlich vereinfacht werden. So ist es beispielsweise möglich, einen Vektordreher zu nutzen, der das Filterausgangssignals als Eingangssignal erhält und in Bezug auf einen Referenzwinkel ein mit dem Referenzwinkel umlaufendes Koordinatensystem bereitstellt. Da hier nur eine Eingangskomponente genutzt zu werden braucht, können somit die d-Komponente und die q-Komponente als Ausgangssignale des Vektordrehers einen Gleichanteil und einen Anteil mit einer doppelten Referenzfrequenz bereitstellen. Durch Mittelwertbildung kann dann der Anteil mit der doppelten Referenzfrequenz reduziert oder sogar vollständig unterdrückt werden.

Gemäß einer vorteilhaften Weiterbildung wird vorgeschlagen, dass Frequenzbereiche für Interharmonische anhand einer Netzfrequenz und einer Maschinenfrequenz ermittelt werden. Auf diese Weise lassen sich die Frequenzbereiche für die Interharmonischen anhand im Umrichter verfügbarer Größen auf einfache Weise ermitteln. Es werden also keine separaten Sensoren und/oder dergleichen benötigt.

Gemäß einer vorteilhaften Weiterbildung wird vorgeschlagen, dass das Verfahren nur für die ermittelten Interharmonischen durchgeführt wird. Dieser Weiterbildung liegt die Erkenntnis zugrunde, dass lediglich für die Interharmonischen eine entsprechende Maßnahme erforderlich ist, um die Ausbildung kritischer Schwingungszustände zu vermeiden. Außerhalb der Frequenzbereiche für die Interharmonischen braucht deshalb keine Verfahrensführung durchgeführt zu werden, weshalb ein Eingriff in eine Umrichtersteuerung bzw. in die Steuereinheit reduziert werden kann. Dadurch können Auswirkungen auf die Qualität der Steuerung des Umrichters gering gehalten werden.

Darüber hinaus wird vorgeschlagen, dass für die d-Komponente und die q-Komponente jeweils ein eigener PI-Regler vorgesehen wird. Dadurch können die d-Komponente und die q-Komponente unabhängig voneinander geregelt werden.

Eine weitere Ausgestaltung schlägt vor, dass die Park-Transformation und die inverse Park-Transformation mittels eines Vektordrehers unter Nutzung eines Referenzwinkels durchgeführt werden. Dadurch kann auf einfache Weise die Park-Transformation durchgeführt werden. Darüber hinaus ist es möglich, wenn die Steuereinheit bereits ohnehin einen Vektordreher umfasst, diesen zugleich auch dazu zu nutzen, das erfindungsgemäße Verfahren durchzuführen.

Vorzugsweise wird der Referenzwinkel zumindest unter Berücksichtigung eines Netzwinkels, der Netzfrequenz, der Maschinenfrequenz und eines Flusswinkels des magnetischen Flusses der elektrischen Maschine ermittelt. Dadurch kann ein Referenzwinkel bereitgestellt werden, der für die unterschiedlichsten Anwendungen im Rahmen der erfindungsgemäßen Verfahrensführung geeignet ist.

Mit der Erfindung wird ferner ein Rechnerprogrammprodukt umfassend ein Programm für eine Rechnereinheit mit Programmcodeabschnitten eines Programms zum Ausführen der Schritte des Verfahrens gemäß der Erfindung vorgeschlagen, wenn das Programm durch die Rechnereinheit ausgeführt wird, so dass die Rechnereinheit wenigstens ein Kompensationssignal ermittelt. Besonders vorteilhaft umfasst das Rechnerprogrammprodukt ein rechnerlesbares Medium, auf welchem die Programmcodeabschnitte gespeichert sind. Darüber hinaus kann das Programm direkt in einen internen Speicher der Rechnereinheit ladbar sein. So ist es beispielsweise möglich, das Programm aus einem Netzwerk von einer Datenquelle, beispielsweise einem Server, herunterzuladen und in einen internen Speicher der Rechnereinheit zu laden, so dass der Rechner das Programm ausführen kann. Vorzugsweise ist die Rechnereinheit in die Steuereinheit integriert angeordnet. Die Rechnereinheit kann auch zugleich die Steuereinheit bereitstellen.

Die für das erfindungsgemäße Verfahren angegebenen Vorteile und Wirkungen gelten gleichermaßen für das Rechnerprogrammprodukt sowie für die Steuereinheit.

Weitere Merkmale und Vorteile sind der folgenden Beschreibung von Ausführungsbeispielen anhand der beigefügten Figuren zu entnehmen. In den Figuren bezeichnen gleiche Bezugszeichen gleiche Merkmale und Funktionen.

Es zeigen:

FIG 1    in einer schematischen Blockschaltbilddarstellung eine erste Ausgestaltung für einen Umrichter, der als 6-pulsiger Umrichter ausgebildet ist;

FIG 2    eine schematische Blockschaltbilddarstellung für eine zweite Ausgestaltung eines Umrichters, der als 12-pulsiger Umrichter ausgebildet ist und zwei getrennte Gleichstromzwischenkreise aufweist, die jeweils eine Zwischenkreisinduktivität aufweisen, wobei die Zwischenkreisinduktivitäten der beiden Zwischenkreise magnetisch miteinander gekoppelt sind;

FIG 3    in einer schematischen Blockschaltbilddarstellung eine dritte Ausgestaltung für einen Umrichter, der als 24-pulsiger Umrichter ausgebildet ist und zwei getrennte Gleichstromzwischenkreise mit magnetisch gekoppelten Zwischenkreisinduktivitäten aufweist,

FIG 4    in einer schematischen Diagrammdarstellung eine Darstellung eines Campbell-Diagramms für eine Anordnung gemäß FIG 2,

FIG 5    eine schematische Diagrammdarstellung basierend auf FIG 4, bei der eine Abhängigkeit einer Referenzfrequenz von einer Maschinenfrequenz darstellt ist, und

FIG 6    ein schematisches Blockschaltbild für eine Steuereinheit gemäß der Erfindung.

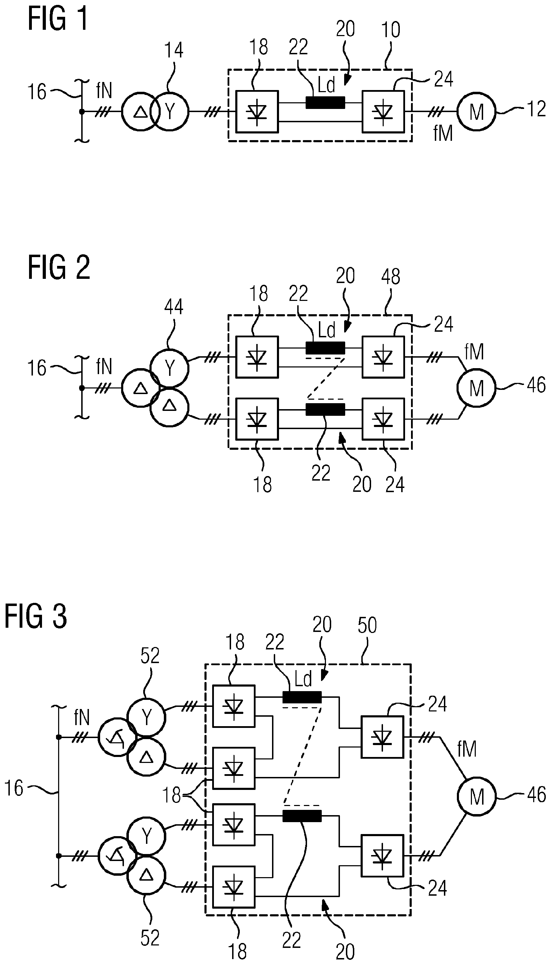

FIG 1 zeigt in einer schematischen Blockschaltbilddarstellung einen 6-pulsigen Umrichter 10, der einen netzseitigen Wechselrichter 18 und einen maschinenseitigen Wechselrichter 24 aufweist. Der Wechselrichter 18 und der Wechselrichter 24 sind über einen Gleichstromzwischenkreis 20 elektrisch miteinander gekoppelt. Der Gleichstromzwischenkreis 20 weist zu diesem Zweck eine Induktivität 22 auf.

Der Wechselrichter 18 ist wechselspannungsseitig bzw. wechselstromseitig an eine Sekundärwicklung eines Transformators 14 angeschlossen. Der Transformator 14 weist eine Primärwicklung auf, die an ein dreiphasiges Wechselspannungsnetz 16, hier das öffentliche Energieversorgungsnetz, angeschlossen ist. Der Transformator 14 ist als Dreiphasen-Transformator ausgebildet, wobei seine Primärwicklung in Dreieckschaltung und seine Sekundärwicklung in Sternschaltung verschaltet sind.

Der Wechselrichter 24 ist wechselspannungsseitig bzw. wechselstromseitig an eine rotierende elektrische Maschine 12 angeschlossen, die für einen dreiphasigen Betrieb ausgelegt ist. Die rotierende elektrische Maschine 12 ist vorliegend eine Synchronmaschine.

FIG 2 zeigt eine alternative Ausgestaltung für einen Umrichter 48, der vorliegend als 12-pulsiger Umrichter ausgebildet ist. Zu diesem Zweck weist der Umrichter 48 zwei netzseitige Wechselrichter 18 sowie zwei maschinenseitige Wechselrichter 24 auf, wobei jeweils einer der Wechselrichter 18 über einen Gleichstromzwischenkreis 20 mit einer Zwischenkreisinduktivität 22 mit einem jeweiligen der beiden maschinenseitigen Wechselrichter 24 elektrisch verbunden ist. Vorliegend ist vorgesehen, dass die beiden Zwischenkreisinduktivitäten 22 der beiden Zwischenkreise 20 magnetisch miteinander gekoppelt sind. In alternativen Ausgestaltungen kann jedoch auch vorgesehen sein, dass eine derartige Kopplung nicht vorgesehen ist.

Der Umrichter 48 stellt maschinenseitig ein 6-phasiges Wechselspannungsnetz bzw. Wechselstromnetz zur Verfügung, an das eine entsprechend ausgerüstete rotierende elektrische Maschine 46 angeschlossen ist. Netzseitig ist der Umrichter 48 über einen Transformator 44 an das dreiphasige Wechselspannungsnetz 16 angeschlossen. Der Transformator 44 weist hierfür eine Primärwicklung in Dreieckschaltung auf, die unmittelbar an das Wechselspannungsnetz 16 angeschlossen ist. Darüber hinaus umfasst der Transformator 44 zwei Sekundärwicklungen, von denen eine in Sternschaltung und eine weitere Dreieckschaltung ausgebildet ist. Jeweils eine der beiden Sekundärwicklungen ist an einen der beiden netzseitigen Wechselrichter 18 des Umrichters 48 angeschlossen.

FIG 3 zeigt ein schematisches Blockschaltbild für eine weitere Ausgestaltung eines Umrichters 50, der vorliegend als 24-pulsiger Umrichter ausgebildet ist. Zu diesem Zweck umfasst der Umrichter 50 zwei maschinenseitige Wechselrichter 24, die - wie in Bezug auf FIG 2 bereits erläutert - an die rotierende elektrische Maschine 46 angeschlossen sind. Netzseitig weist der Umrichter 50 vier Wechselrichter 18 auf, die gleichstromseitig paarweise in Reihe geschaltet an jeweils einem von zwei Gleichstromzwischenkreisen 20 angeschlossen sind. Jeder der Gleichstromzwischenkreise 20 weist wiederum eine Zwischenkreisinduktivität 22 auf, die vorliegend magnetisch gekoppelt sind. Auch hier ist die magnetische Kopplung optional und kann bei alternativen Ausgestaltungen entfallen. Ein jeweiliges, in Reihe geschaltetes Paar von netzseitigen Wechselrichtern 18 ist somit über den jeweiligen Gleichstromzwischenkreis 20 mit einem der maschinenseitigen Wechselrichter 24 elektrisch gekoppelt.

Der Umrichter 50 ist über zwei Transformatoren 52 an das dreiphasige Wechselspannungsnetz 16 angeschlossen. Zu diesem Zweck weist jeder der beiden Transformatoren 52 eine Primärwicklung auf, die vorliegend in Zickzack-Schaltung ausgebildet ist. Sekundärseitig ist jeder der Transformatoren 52 wie der Transformator 44 ausgebildet, das heißt, jeder der Transformatoren 52 weist zwei Sekundärwicklungen auf, von denen eine in Sternschaltung und eine andere in Dreieckschaltung ausgebildet ist.

Jeweils einer der beiden Transformatoren 52 ist an eines der Paare der netzseitigen Wechselrichter 18 angeschlossen, wobei eine der Sekundärwicklungen an einen ersten der in Reihe geschalteten netzseitigen Wechselrichter 18 und die andere der beiden Sekundärwicklungen an den jeweiligen anderen der netzseitigen Wechselrichter 18 angeschlossen. Dadurch koppelt jeder Transformator 52 einen der beiden Gleichstromzwischenkreise 20 über die jeweiligen netzseitigen Wechselrichter 18 mit dem Wechselspannungsnetz 16.

Die hier lediglich beispielhaft dargestellten Umrichterkonzepte für die Umrichter 10, 48, 50 finden üblicherweise Einsatz bei großen Leistungen, beispielsweise im Bereich von etwa einem MW oder größer. Dem Grunde nach können diese Schaltungskonzepte jedoch auch bei kleineren Leistungen zum Einsatz kommen.

Bei derartigen Antriebskonzepten können sogenannte interharmonische Pendelmomente in einem Antriebsstrang bzw. der elektrischen Maschine auftreten, die dadurch verursacht werden können, dass eine Netzseite und eine Maschinenseite in der Regel nicht vollständig elektrisch entkoppelt werden können. In der Regel sind Amplituden solcher Pendelmomente vergleichsweise klein, beispielsweise kleiner als 2% eines Bemessungsmoments bzw. eines Betriebsmoments. Werden jedoch mechanische Eigenfrequenzen im Bereich der elektrischen Maschine 12, 46 angeregt, die häufig in einem Frequenzbereich kleiner als 50Hz liegen, kann ein Pendelmoment einen deutlich größeren Wert annehmen, der sogar mechanisch kritisch sein kann.

Diesem Problem widmet sich die Erfindung. Eine Zwischenkreisleistung in einem der Gleichstromzwischenkreise 20 bzw. einem Teil des Gleichstromzwischenkreises kann ermittelt werden gemäß:

$$Pd = Ud * Id + \sum_v\sum_\mu UD_v * \cos(\omega_v * t - \phi_v) * Id_\mu * \cos(\omega_\mu * t - \phi_\mu)\mathrm{Ud}$$

Spannungsharmonische, die Frequenzen 0Hz, 6 * $f_N$, 6 * $f_M$, 12 * $f_N$, 12 * $f_M$, ... und dergleichen aufweisen, und Stromharmonische, die die gleichen Frequenzen aufweisen, bewirken aufgrund der durch Produktbildung ermittelten Zwischenkreisleistung die in der folgenden Tabelle angegebenen Frequenzen:

| | ZK Spannung Netzseite | | |
|---|---|---|---|
| DC Strom▼ | DC (gleich) | 6*fn (gegen) | 12*fn (gleich) |
| DC (gleich) | DC | 6*fn(gegen) | 12*fn (gleich) |
| 6*fn (gegen) | 6*fn (gegen) | DC, 12 fn (gleich) | 6*fn, 18 fn (gegen) |
| 12*fn (gleich) | 12*fn (gleich) | 6*fn, 18*fn (gegen) | DC, 24*fn (gleich) |
| 6*fm (gegen) | 6*fm (gegen) | 6*fm-6*fn, 6*fm+6*fn (gleich) | 6*fm-12*fn, 6*fm+12*fn (gegen) |
| 12*fm (gleich) | 12*fm (gleich) | 12*fm-6*fn, 12*fm+6*fn (gegen) | 12*fm-12*fn, 12*fm+12*fn (gleich) |

In der Tabelle sind die erste Zeile und die erste Spalte dem Strom bzw. der Spannung zugeordnet. Die weiteren Tabellenwerte beziehen sich auf Leistungen. Die in der Tabelle mit "gleich" gekennzeichneten Werte sind in den beiden Gleichstromzwischenkreisen 20 bei dem 12-pulsigen Umrichter 48 gemäß FIG 2 phasengleich, wohingegen die mit "gegen" gekennzeichneten Werte gegenphasig sind.

Besondere Beachtung ist auf die folgenden Interharmonischen in der Zwischenkreisleistung zu legen, die in der Tabelle im rechten unteren Bereich angegeben sind, nämlich:

$$6 * fm +/- 6 * fn,$$

$$6 * fm +/- 12 * fn,$$

$$12 * fm +/- 6 * fn,$$

$$12 * fm +/- 12 * fn,$$

Diese Werte werden vernachlässigbar bzw. zu Null in der Nähe von $f_M = 0{,}5 * f_N$, $f_M = f_N$ und $f_M = 2 * f_N$. An diesen Positionen besteht die Gefahr von niederfrequenten Leistungspendellungen im Netz und in der elektrischen Maschine, was gleichbedeutend mit entsprechenden niederfrequenten Drehmomentpendelungen ist.

Bei einem 12-pulsigen Umrichter, wie dem Umrichter 48, mit zwei getrennten Gleichstromzwischenkreisen 20 können sich aufgrund der Phasenlage in den beiden Gleichstromzwischenkreisen 20 folgende Interharmonische in der gesamten Zwischenkreisleistung ergeben:

$$6 * f_M +/- 6 * f_N \text{ und } 12 * f_M +/- 12 * f_M$$

An dieser Stelle ist dann insbesondere ein Bereich um $f_M = f_N$ kritisch.

Die vorherigen Überlegungen wurden zwar für einen 12-pulsigen Umrichter mit zwei Gleichstromzwischenkreisen dargelegt, sind jedoch gleichermaßen auf entsprechende andere Umrichter, insbesondere auf einen 6-pulsigen Umrichter, wie dem Umrichter 10, oder einen 24-pulsigen Umrichter, wie dem Umrichter 50, anwendbar.

Um die durch die Interharmonischen bewirkten Problematiken zu vermeiden, wird mit der Erfindung vorgeschlagen, dass durch Modulation eines Aussteuerungsgrades eine Maschinenleistung der elektrischen Maschine 12, 46 moduliert wird. Durch diese Modulation kann die Pendelleistung in der elektrischen Maschine und damit ein Pendelmoment im Luftspalt erzeugt werden, das geeignet ist, die Interharmonischen im Luftspaltmoment zu kompensieren. Zu diesem Zweck kann ein DFT-Regler zur Minimierung der internen harmonischen genutzt werden, wie es im Folgenden noch erläutert werden wird.

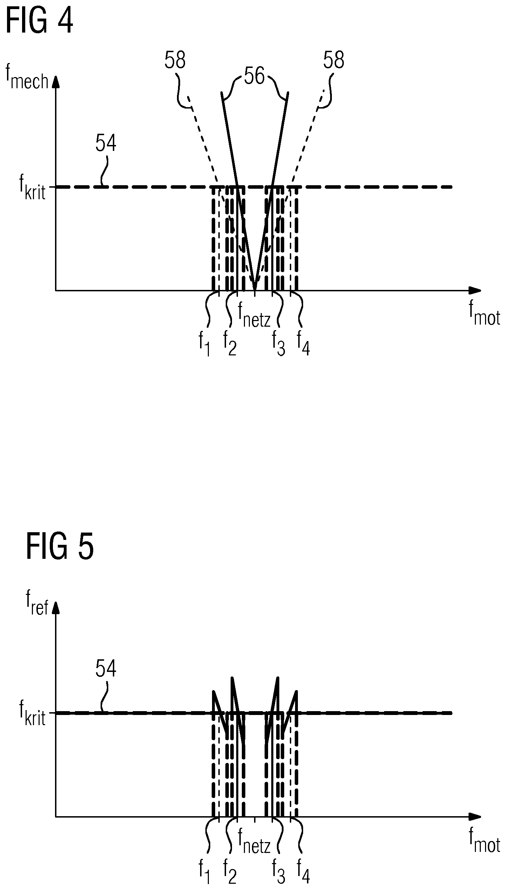

FIG 4 zeigt in einer schematischen grafischen Darstellung als ein Campbell-Diagramm für den Umrichter gemäß FIG 2. Eine Abszisse des Diagramms gemäß FIG 4 ist einer Maschinenfrequenz zugeordnet, wohingegen eine Ordinate einer mechanischen Frequenz der elektrischen Maschine 12, 46 zugeordnet ist. In der Literatur ist die Abszisse hiervon abweichend oft auch der Drehzahl der elektrischen Maschine zugeordnet. Mit 54 ist eine kritische mechanische Frequenz des Antriebsstrangs im Diagramm gemäß FIG 4 bezeichnet. Weiterhin sind in FIG 4 bezogen auf die Netzfrequenz Winkel 56 und 58 dargestellt. Der Winkel 56 ist $12 * |f_{mot} - f_{Netz}|$ zugeordnet. Der Winkel 58 ist $6 * |f_{mot} - f_{Netz}|$ zugeordnet. Aus den Schnittpunkten der Winkel 56, 58 mit der kritischen Frequenz 54 ergeben sich die Frequenzen $f_1$, $f_2$, $f_3$ und $f_4$, die kritische Eigenfrequenzen der rotierenden elektrischen Maschine, insbesondere in Bezug auf den mechanischen Antriebsstrang, darstellen. Aus den Schnittpunkten ergeben sich somit die Maschinenfrequenzen, bei denen die kritische Eigenfrequenz des Wellenstranges angeregt wird. Da vorliegend nur diese Frequenzen kritisch sind, ist auch nur bei diesen Frequenzen eine Regelung gemäß der Erfindung erforderlich. Die mechanischen maschinenseitigen Eigenfrequenzen basieren unter anderem auf Herstellerangaben. Da hier Toleranzen zu beachten sind, ist vorliegend vorgesehen, dass eine entsprechende Regelung bzw. Verfahrensführung nicht nur exakt an den jeweiligen Frequenzen sondern auch in einem gewissen Bereich um die Frequenzen $f_1$, $f_2$, $f_3$ und $f_4$ herum erfolgt.

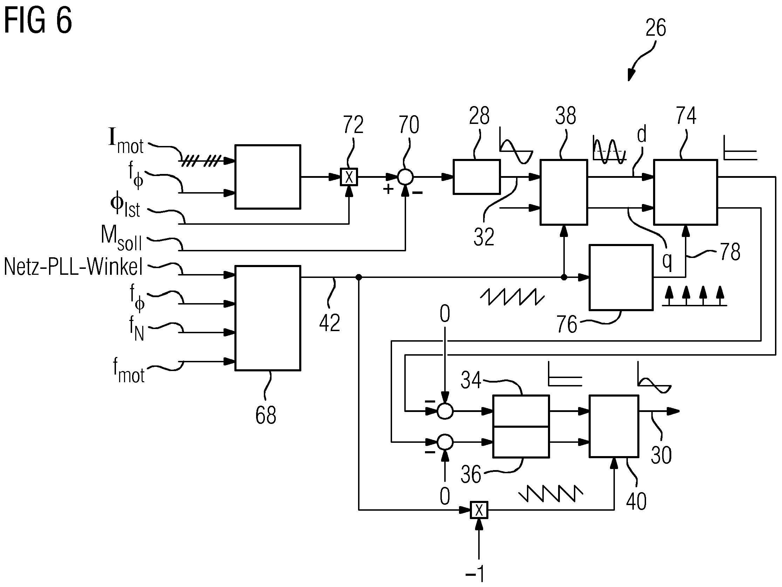

Die Verfahrensführung nutzt vorzugsweise ein Referenzsystem, welches unter anderem einem Wirkmechanismus bezüglich der Interharmonischen berücksichtigt. Das Referenzsystem umfasst insbesondere einen Referenzwinkel 42, der bei bereits bei bestehenden Steuereinheiten 26 (FIG 6) für die Umrichter 10, 48, 50 benutzt wird, um diese zu steuern.

FIG 5 zeigt in einem weiteren schematischen Diagramm eine Referenzfrequenz für eine Ausregelung von Interharmonischen Pendelleistungen. Eine Abszisse ist wiederum einer Maschinenfrequenz zugeordnet, wohingegen eine Ordinate der Referenzfrequenz zugeordnet ist. Mit 54 ist wieder eine Gerade bezeichnet, die parallel zur Abszisse ist und die kritische Frequenz des Antriebsstrangs bezeichnet. Zu erkennen ist, dass im Bereich der Frequenzen $f_1$, $f_2$, $f_3$ und $f_4$ die kritische Frequenz 54 keinen konstanten Wert aufweist, sondern um die jeweiligen vorgenannten Frequenzen herum durch einen geraden Abschnitt 60, 62, 64, 66 dargestellt ist. Die Referenzfrequenz wird außerhalb einer Toleranzbreite um die Frequenzen $f_1$, $f_2$, $f_3$ und $f_4$ auf die kritische Frequenz gesetzt. Innerhalb einer Toleranzbreite um die Frequenzen $f_1$, $f_2$, $f_3$ und $f_4$ wird die Referenzfrequenz entsprechend dem Entstehungsmechanismus der Interharmonischen mit 6 * (fn +/-fmot) bzw.12 * (fn +/- fmot) auf den Geradenabschnitten 60, 62, 64, 66 geführt. Durch geeignete Verfahrensführung kann somit erreicht werden, dass die diesbezüglichen Interharmonischen stark gedämpft werden.

FIG 6 zeigt nun ein schematisches Blockschaltbild für eine Steuereinheit 26 gemäß der Erfindung, die ausgebildet ist, eine Verfahrensführung zur Unterdrückung von kritischen Pendelleistungen zu realisieren. Das folgende Ausführungsbeispiel wird für einen Umrichter 48 gemäß FIG 2 erläutert. Die kritische Frequenz entspricht vorliegend einer Eigenfrequenz eines Wellenstrangs, der eine Welle der elektrischen Maschine umfasst.

Zunächst werden drehmomentbezogene Maschinenstromanteile aus elektrischen Maschinenströmen der elektrischen Maschine 46 ermittelt. Zu diesem Zweck werden aus den sechs Strömen, die umrichterseitig für die elektrische Maschine 46 bereitgestellt werden, die momentbildenden Maschinenstromkomponenten berechnet. Dies kann dadurch erfolgen, dass die Komponente eines Stromraumzeigers ermittelt wird, die senkrecht zu einem Flussraumzeiger steht. Sodann wird ein Ist-Wert für einen magnetischen Fluss der elektrischen Maschine 46 ermittelt und die momentbildenden Maschinenstromkomponente mit dem ermittelten Ist-Wert für den magnetischen Fluss durch Multiplikation mittels eines Multiplizierers 72 verknüpft. Dabei können Frequenzen der Interharmonischen aus 6 * ($f_{netz}$ - $f_{mot}$) bzw.12 * ($f_{netz}$ - $f_{mot}$) ermittelt werden. Eine Ordnungszahl kann dadurch bestimmt sein, in welchem Bereich gemäß FIG 4 sich die Maschinenfrequenz befindet. Zwischen den in FIG 4 markierten Bereichen kann die Verfahrensführung bzw. Regelung deaktiviert werden.

Der Referenzwinkel 42 wird vorliegend aus Winkeln bestimmt, die das Referenzsystem für Steuerdaten und damit auch für sämtliche Netz- und Maschinenoberschwingungen bilden:

$$\text{Referenzwinkel} = 6 * (\text{Netzwinkel} - \text{Flusswinkel})$$

bzw.

$$\text{Referenzwinkel} = \text{Zeichen } 12 * (\text{Netzwinkel} - \text{Flusswinkel})$$

Zu diesem Zweck umfasst die Steuereinheit 26 eine Referenzsystemeinheit 68.

Die Steuereinheit 26 nutzt digitale Signalverarbeitung, um die Verfahrensführung auszuführen. Zu diesem Zweck umfasst die Steuereinheit 26 eine nicht dargestellte Rechnereinheit, die mittels eines geeignet ausgebildeten Rechnerprogramms gesteuert wird, sodass die gewünschte Funktion durch die Steuereinheit 26 bereitgestellt wird. Dabei wird vorliegend durch eine Flankendetektion des Referenzwinkels 42 am Ende einer jeweiligen Periodendauer der Interharmonischen ein Rücksetzsignal erzeugt. Da alle Signale zum Zwecke der digitalen Signalverarbeitung abgetastet werden, entsteht hier ein Jitter in Bezug auf eine Anzahl von Abtastintervallen in einer jeweiligen Periodendauer.

Vom Ist-Wert des Drehmoments wird mittels eines Subtrahierers 70 ein Soll-Wert für das Drehmoment $M_{soll}$ subtrahiert. Das Ergebnissignal der Subtraktion durch den Subtrahierer 70 wird auf einen Bandpassfilter 28 aufgegeben. Der Bandpassfilter 28 ist vorliegend als Filter zweiter Ordnung ausgebildet. Der Bandpassfilter 28 ist auf die mechanische Eigenfrequenz des Antriebsstranges bzw. der elektrischen Maschine 12, 46 bzw. 6 * ($f_{netz}$ - $f_{mot}$) bzw.12 * ($f_{netz}$ - $f_{mot}$) abgestimmt.

Ein Filterausgangssignal 32 des Bandpassfilters 28 wird auf einen Vektordreher 38 gegeben, mittels dem gemäß einer Park-Transformation ein mit dem Referenzwinkel 42 umlaufendes Koordinatensystem bereitgestellt wird. Da vorliegend nur eine einzige Eingangskomponente vorliegt, werden somit bei jeder der Komponenten, nämlich der d-Komponente und der q-Komponente durch den Vektordreher 38 ein Gleichanteil und ein Anteil mit doppelter Referenzfrequenz erzeugt. Die d-Komponente und die q-Komponente werden dann einem Mittelwertbildner 74 zugeführt, der eine Mittelwertbildung für die beiden Komponenten über eine Periodendauer der Referenzfrequenz durchführt. Dadurch wird der Anteil in Bezug auf die doppelte Referenzfrequenz unterdrückt bzw. eliminiert. Zu diesem Zweck kann mittels einer Triggereinheit 76 aus dem Referenzwinkel 42 ein Triggersignal 78 für den Mittelwertbildner 74 erzeugt werden.

Die vom Mittelwertbildner 74 bereitgestellten gemittelten Komponenten, werden sodann jeweils eigenen PI-Reglern 34, 36 zugeführt, die sie jeweils auf Null regeln. Die entsprechenden Ausgangssignale der PI-Regler 34, 36 werden sodann mittels eines weiteren Vektordrehers 40 rücktransformiert, sodass ein vorzugsweise sinusförmiges Modulationssignal bereitsteht, dass zur Modulation bzw. Überlagerung zu dem Netzsteuersignal und/oder dem Maschinensteuersignal dient.

$$\text{Modulationssignal}$$
$$= \text{Reglerausgang}_d * \cos(\text{Referenzwinkel}) + \text{Reglerausgang\_q}$$
$$* \sin(\text{Referenzwinkel})$$

Mit der Erfindung ist es somit möglich, dass eine Verfahrensführung lediglich Größen benötigt, die im Umrichter 10, 48, 50 ohnedies zur Verfügung stehen. Es werden also keine weiteren Messwerte der elektrischen Maschine benötigt, insbesondere in Bezug auf an einer Welle der elektrischen Maschine 12, 46 bereitgestelltes Drehmoment. Die Erfindung benötigt für ihre Realisierung im Wesentlichen auch keine Informationen über den Antriebsstrang bzw. die elektrische Maschine hinsichtlich ihrer mechanischen Eigenschaften.

Insgesamt ergeben sich mit der Erfindung die folgenden Vorteile:
Die Luftspaltleistung und das Luftspaltmoment der elektrischen Maschine brauchen lediglich aus dem Ist-Wert der elektrischen Spannung und dem Ist-Wert des elektrischen Stroms für die elektrische Maschine berechnet zu werden.

Eine Auswahl der Ordnungszahlen für die jeweiligen Interharmonischen kann mittels des Campbell-Diagramms erfolgen. Dabei kann die Auswahl abhängig von einer Drehzahl der elektrischen Maschine erfolgen, die keine kritische mechanische Eigenfrequenz der elektrischen Maschine bzw. des Antriebsstranges anregen. In der Regel erweist sich die niedrigste der mechanischen Eigenfrequenzen als besonders kritisch. Darauf basierend werden Drehzahlbereiche definiert, die die Ordnungszahlen berücksichtigen und die Toleranzen in Bezug auf die mechanischen Eigenfrequenzen Rechnung tragen, wobei die Regelung vorzugsweise lediglich in diesen Drehzahlbereichen aktiviert ist. Darüber hinaus kann die Auswahl der Ordnungszahlen auch abhängig von der jeweiligen Umrichtertopologie erfolgen. Bei anderen Umrichtertopologien können andere Ordnungszahlen bzw. Kombinationen von Ordnungszahlen gewählt werden.

Das Referenzsystem für die Interharmonischen kann aus einer Netz-PLL (Phase Locked Loop), einem Flusswinkel (Basis für den maschinenseitigen Steuersatz) und den Ordnungszahlen ermittelt werden. Das Referenzsystem beinhaltet eine Referenzfrequenz und einen Referenzphasenwinkel bzw. Referenzwinkel.

Es wird eine Filterung mit der Referenzfrequenz, insbesondere Bandpassfilterung, des Ist-Wertes des Luftspaltmoments, von dem vorher noch ein Soll-Wert des Drehmoments subtrahiert werden kann, kann durchgeführt werden, wobei die Referenzfrequenz von der Netzfrequenz und der Maschinendrehzahl abhängt und entsprechend mitgeführt wird.

Ferner kann eine Vektordrehung mit dem Referenzwinkel und einer Mittelwertbildung des gefilterten Signales vorgesehen sein, wobei die Vektordrehung einer digitalen Fourier-Transformation (DFT) entspricht. Die durch die Vektordrehung erhaltenen Ausgangssignale beschreiben die beiden kartesischen Komponenten der DFT.

Vorzugsweise werden die beiden kartesischen Komponenten auf zwei PI-Regler geführt, die diese Komponenten zu null regeln. Hierdurch gewonnene Ausgangssignale der der PI-Regler können mittels Vektordrehung unter Nutzung des Referenzwinkels wieder rücktransformiert werden, sodass ein Modulationssignal erhalten wird, welches vorzugsweise sinusförmig sein kann.

Mit dem Modulationssignal bzw. Kompensationssignal 30 können die Wechselrichter so angesteuert werden, dass eine Pendelleistung eingeprägt wird, die die entsprechende Interharmonische Luftspaltleistung und damit das entsprechende Interharmonische Luftspaltmoment kompensiert.

Die vorangehenden Ausführungsbeispiele sollen die Erfindung lediglich erläutern und diese nicht beschränken. Selbstverständlich wird der Fachmann bei Bedarf entsprechende Variationen und Anpassungen vorsehen. Der Gegenstand der Erfindung wird durch die Ansprüche definiert.

**Patentansprüche**

1. Verfahren zum Betreiben eines Umrichters (10,48,50) zum Koppeln einer für einen Betrieb an Wechselspannung ausgebildeten elektrischen Maschine (12,46) mit einem Wechselspannungsnetz (16), bei dem ein an das Wechselspannungsnetz (16) angeschlossener netzseitiger Wechselrichter (18) des Umrichters (10,48,50) mittels eines Gleichstromzwischenkreises (20) mit einem an die elektrische Maschine (12) angeschlossenen maschinenseitigen Wechselrichter (24) des Umrichters (10,48, 50) elektrisch gekoppelt wird, wobei ein Wandeln von elektrischer Energie durch den netzseitigen Wechselrichter (18) mittels eines Netzsteuersignals und ein Wandeln von elektrischer Energie durch den maschinenseitigen Wechselrichter (24) mittels eines Maschinensteuersignals der Steuereinheit (26) gesteuert wird, mit den Schritten:

   - Ermitteln eines drehmomentbezogenen Maschinenstromanteils aus elektrischen Maschinenströmen der elektrischen Maschine (12),
   - Erfassen eines Ist-Werts für einen magnetischen Fluss,

- Ermitteln eines Ist-Werts eines Maschinendrehmoments der elektrischen Maschine (12,46) durch Verknüpfen des erfassten magnetischen Flusses mit dem drehmomentbezogenen Maschinenstromanteil,
- Ermitteln einer Drehmomentdifferenz zwischen dem Ist-Wert des Maschinendrehmoments und einem Soll-Wert des Maschinendrehmoments der elektrischen Maschine (12,46),
- Filtern der Drehmomentdifferenz mittels eines Bandpassfilters (28), welches auf eine maschinenseitige Eigenfrequenz abgestimmt ist,
- Ermitteln eines Kompensationssignals (30) durch Verarbeiten eines Filterausgangssignals (32) des Bandpassfilters (28), und
- Überlagern des Kompensationssignals (30) zu dem Netzsteuersignal und/oder dem Maschinensteuersignal,

**dadurch gekennzeichnet, dass**
das Verarbeiten des Filterausgangssignals (32) des Bandpassfilters (28) mittels einer Park-Transformation erfolgt, um eine d-Komponente und eine q-Komponente zu ermitteln, Mittelwerte für die d-Komponente und die q-Komponente ermittelt werden, die Mittelwerte mittels eines PI-Reglers (34,36) auf null geregelt werden und durch eine inverse Park-Transformation das Kompensationssignal (30) ermittelt wird.

2. Verfahren nach Anspruch 1, **dadurch gekennzeichnet, dass** Frequenzbereiche für Interharmonische anhand einer Netzfrequenz und einer Maschinenfrequenz, insbesondere einer Maschinendrehzahl, ermittelt werden.

3. Verfahren nach Anspruch 2, **dadurch gekennzeichnet, dass** Verfahren nur für die ermittelten Interharmonischen durchgeführt wird.

4. Verfahren nach einem der vorhergehenden Ansprüche, **dadurch gekennzeichnet, dass** für die d-Komponente und die q-Komponente jeweils ein eigener PI-Regler (34,36) vorgesehen wird.

5. Verfahren nach einem der vorhergehenden Ansprüche, d a - **durch gekennzeichnet**, dass die Park-Transformation und die inverse Park-Transformation mittels eines Vektordrehers (38,40) unter Nutzung eines Referenzwinkels (42) durchgeführt werden.

6. Verfahren nach Anspruch 5, **dadurch gekennzeichnet, dass** der Referenzwinkel (42) zumindest unter Berücksichtigung eines Netzwinkels, der Netzfrequenz, der Maschinenfrequenz und eines Flusswinkels des magnetischen Flusses ermittelt wird.

7. Steuereinheit (26) zum Betreiben eines Umrichters (10, 48,50) zum Koppeln einer für einen Betrieb an Wechselspannung ausgebildeten elektrischen Maschine (12,46) mit einem Wechselspannungsnetz (16), zu welchem Zweck der Umrichter (10, 48,50) einen an das Wechselspannungsnetz (16) angeschlossenen netzseitigen Wechselrichter (18) und einen an die elektrische Maschine (12) angeschlossenen maschinenseitigen Wechselrichter (24) aufweist, die zum elektrischen Koppeln an einen Gleichstromzwischenkreis (20) angeschlossen sind, wobei die Steuereinheit (26) einen netzseitigen Anschluss zum Anschließen an den netzseitigen Wechselrichter (18) aufweist und ausgebildet ist, am netzseitigen Anschluss ein Netzsteuersignal zum Steuern des netzseitigen Wechselrichters (18) bereitzustellen, und wobei die Steuereinheit (26) einen maschinenseitigen Anschluss zum Anschließen an den maschinenseitigen Wechselrichter (24) aufweist und ausgebildet ist, am maschinenseitigen Anschluss ein Maschinensteuersignal zum Steuern des maschinenseitigen Wechselrichters (24) bereitzustellen, wobei die Steuereinheit (26) ausgebildet ist,

- einen drehmomentbezogenen Maschinenstromanteil aus elektrischen Maschinenströmen der elektrischen Maschine (12,46) zu ermitteln,
- einen Ist-Wert für einen magnetischen Fluss zu erfassen,
- einen Ist-Wert eines Maschinendrehmoments der elektrischen Maschine (12,46) durch Verknüpfen des erfassten magnetischen Flusses mit dem drehmomentbezogenen Maschinenstromanteil zu ermitteln,
- eine Drehmomentdifferenz zwischen dem Ist-Wert des Maschinendrehmoments und einem Soll-Wert des Maschinendrehmoments der elektrischen Maschine (12,46) zu ermitteln,
- die Drehmomentdifferenz mittels eines Bandpassfilters (28), welches auf eine maschinenseitige Eigenfrequenz abgestimmt ist, zu filtern,
- ein Kompensationssignal (30) durch Verarbeiten eines Filterausgangssignals (32) des Bandpassfilters (28) zu ermitteln, und
- das Kompensationssignal (30) zu dem Netzsteuersignal und/ oder dem Maschinensteuersignal zu überlagern,

**dadurch gekennzeichnet, dass**

die Steuereinheit (26) ausgebildet ist, dass das Verarbeiten des Filterausgangssignals (32) des Bandpassfilters (28) ein Transformieren mittels einer Park-Transformation umfasst, um eine d-Komponente und eine q-Komponente zu ermitteln, Mittelwerte für die d-Komponente und die q-Komponente zu ermitteln, die Mittelwerte mittels eines PI-Reglers (34,36) auf null zu regeln und durch eine inverse Park-Transformation das Kompensationssignal (30) zu ermitteln.

8. Rechnerprogrammprodukt umfassend ein Programm für eine Rechnereinheit mit Programmcodeabschnitten eines Programms zum Ausführen der Schritte eines Verfahrens nach einem der Ansprüche 1-6, wenn das Programm durch die Rechnereinheit der Steuereinheit nach Anspruch 7 ausgeführt wird, so dass die Rechnereinheit wenigstens ein Kompensationssignal zu dem Netzsteuersignal und/ oder dem Maschinensteuersignal ermittelt.

9. Rechnerprogrammprodukt nach Anspruch 8, **dadurch gekennzeichnet, dass** das Rechnerprogrammprodukt ein Rechner-lesbares Medium umfasst, auf welchem die Programmcodeabschnitte gespeichert sind.

**Claims**

1. Method for operating an inverter (10,48,50) for coupling an electric machine (12,46), designed for operation on AC voltage, to an AC voltage network (16) with which a network-side converter (18) of the inverter (10,48,50) connected to the AC voltage network (16) is electrically coupled by means of a DC intermediate circuit (20) to a machine-side converter (24) of the inverter (10,48,50) connected to electric machine (12), wherein conversion of electric energy by the network-side converter (18) is controlled by means of a network control signal and conversion of electric energy by the machine-side converter (24) is controlled by means of a machine control signal of the control unit (26) with the steps:

   - determining a torque-related machine current component composed of electric machine currents of the electric machine (12),
   - detecting an actual value for a magnetic flux,
   - determining an actual value of a machine torque of the electric machine (12,46) by linking the detected magnetic flux to the torque-related machine current component,
   - determining a torque difference between the actual value of the machine torque and a setpoint value of the machine torque of the electric machine (12,46),
   - filtering the torque difference by means of a bandpass filter (28), which is tuned to a machine-side natural frequency,
   - determining a compensation signal (30) by processing a filter output signal (32) of the bandpass filter (28), and
   - superimposing the compensation signal (30) on the network control signal and/or the machine control signal,

   **characterised in that**
   the processing of the filter output signal (32) of the bandpass filter (28) takes place by means of a Park transformation, in order to determine a d-component and a q-component, mean values for the d-component and the q-component are determined, the mean values regulated to zero by means of a PI controller (34,36) and the compensation signal determined by an inverse Park transformation (30).

2. Method according to claim 1, **characterised in that** frequency ranges for interharmonics are determined using a network frequency and a machine frequency, in particular machine speed.

3. Method according to claim 2, **characterised in that** the method is only carried out for the interharmonics determined.

4. Method according to one of the preceding claims,
   **characterised in that** in each case the d-component and the q-component are provided with their own PI controller (34,36).

5. Method according to one of the preceding claims,
   **characterised in that** the Park transformation and the inverse Park transformation are performed by means of a vector rotator (38,40) using a reference angle (42).

6. Method according to claim 5, **characterised in that** the reference angle (42) is determined at least by taking into account a network angle, the network frequency, the machine frequency and a flux angle of the magnetic flux.

7.  Control unit (26) for operating an inverter (10,48,50) for coupling an electric machine (12,46), designed for operation on AC voltage, to an AC voltage network (16) to which end the inverter (10,48,50) comprises a network-side converter (18) connected to the AC voltage network (16) and a machine-side converter (24) connected to the electric machine (12), which, for the electric coupling, are connected to a DC intermediate circuit (20), wherein the control unit (26) comprises a network-side connector for connection to the network-side converter (18) and is designed to provide at the network-side connector a network control signal to control the network-side converter (18), and wherein the control unit (26) comprises a machine-side connector for connection to the machine-side converter (24) and is designed to provide at the machine-side connector a machine control signal to control the machine-side converter (24), wherein the control unit (26) is designed

- to determine a torque-related machine current component composed of electric machine currents of the electric machine (12,46),
- to detect an actual value for a magnetic flux,
- to detect an actual value of a machine torque of the electric machine (12,46) by linking the detected magnetic flux to the torque-related machine current component,
- to determine a torque difference between the actual value of the machine torque and a setpoint value of the machine torque of the electric machine (12,46),
- to filter the torque difference by means of a bandpass filter (28), which is tuned to a machine-side natural frequency,
- to determine a compensation signal (30) by processing a filter output signal (32) of the bandpass filter (28) and
- to superimpose the compensation signal (30) on the network control signal and/or the machine control signal,

**characterised in that**
the control unit (26) is embodied such that the processing of the filter output signal (32) of the bandpass filter (28) comprises a transformation by means of a Park transformation, in order to determine a d-component and a q-component, to determine mean values for the d-component and the q-component, to regulate the mean values to zero by means of a PI controller (34,36) and to determine the compensation signal by an inverse Park transformation (30).

8.  Computer program product comprising a program for a computing unit with program code sections of a program for carrying out the steps of a method according to one of claims 1-6 when the program is executed by the computing unit of the control unit according to claim 7, so that the computing unit determines at least one compensation signal on the network control signal and/or the machine control signal.

9.  Computer program product according to claim 8, **characterised in that** the computer program product comprises a computer-readable medium on which the program code sections are stored.

**Revendications**

1.  Procédé pour faire fonctionner un convertisseur (10, 48, 50) de connexion d'une machine (12, 46) électrique, constituée pour fonctionner sur une tension alternative à un réseau (16) à tension alternative dans lequel on connecte électriquement un onduleur (18) du côté du réseau connecté au réseau (16) à tension alternative, du convertisseur (10, 48, 50) au moyen d'un circuit (20) intermédiaire à courant continu, à un onduleur (24) du côté de la machine, connecté à la machine (12) électrique, du convertisseur (10, 48, 50), dans lequel on commande une transformation d'énergie électrique par l'onduleur (18) du côté du réseau au moyen d'un signal de commande de réseau et une transformation d'énergie électrique par l'onduleur (24) du côté de la machine au moyen d'un signal de commande de machine de l'unité (26) de commande, comprenant les stades :

- détermination d'une proportion de courant de machine rapporté au couple à partir des courants électriques de la machine (12) électrique,
- relevé d'une valeur réelle d'un flux magnétique,
- détermination d'une valeur réelle d'un couple de la machine (12, 46) électrique par combinaison du flux magnétique relevé à la proportion du courant de la machine rapporté au couple,
- détermination d'une différence de couple entre la valeur réelle du couple et une valeur de consigne du couple de la machine (12, 46) électrique,

- filtrage de la différence de couple au moyen d'un filtre (28) à bande passante qui est accordé à une fréquence propre du côté de la machine,
- détermination d'un signal (30) de compensation par traitement d'un signal (32) de sortie du filtre (28) à bande passante, et
- superposition du signal (30) de compensation au signal de commande du réseau et/ou au signal de commande de la machine,

**caractérisé en ce que**
le traitement du signal (32) de sortie du filtre (28) à bande passante s'effectue au moyen d'une transformation de Park pour déterminer une composante d et une composante q, on détermine des valeurs moyennes de la composante d et de la composante q, on régule à zéro les valeurs moyennes au moyen d'un régleur (34, 36) PI et, par une transformation de Park inverse, on détermine le signal (30) de compensation.

2. Procédé suivant la revendication 1, **caractérisé en ce que** l'on détermine des domaines de fréquence pour des inter-harmoniques à l'aide d'une fréquence du réseau et d'une fréquence de la machine, notamment d'un nombre de tours de la machine.

3. Procédé suivant la revendication 1, **caractérisé en ce que** l'on effectue le procédé seulement pour les inter-harmoniques déterminées.

4. Procédé suivant l'une des revendications précédentes, **caractérisé en ce que** l'on prévoit pour la composante d et pour la composante q, respectivement, un régleur (34, 36) PI propre.

5. Procédé suivant l'une des revendications précédentes, **caractérisé en ce que** l'on effectue la transformation de Park et la transformation de Park inverse au moyen d'un rotateur (38, 40) vectoriel en utilisant un angle (42) de référence.

6. Procédé suivant la revendication 5, **caractérisé en ce que** l'on détermine l'angle (42) de référence au moins en tenant compte d'un angle du réseau, de la fréquence du réseau, de la fréquence de la machine et d'un angle du flux magnétique.

7. Unité (26) de commande pour faire fonctionner un convertisseur (10, 48, 50) pour connecter une machine (12, 46) électrique constituée pour fonctionner sur une tension alternative, à un réseau (16) à tension alternative, le convertisseur (10, 48, 50) ayant, à cette fin, un onduleur (18) du côté du réseau connecté au réseau (16) à tension alternative et un onduleur (24) du côté de la machine connecté à la machine (12) électrique qui, pour la connexion électrique, sont connectés à un circuit (20) intermédiaire à courant continu, l'unité (26) de commande ayant une borne du côté du réseau pour la connexion à l'onduleur (18) du côté du réseau et étant constituée pour mettre à disposition, à la borne du côté du réseau, un signal de commande de réseau pour commander l'onduleur (18) du côté du réseau et dans laquelle l'unité (26) de commande a une borne du côté de la machine pour la connexion à l'onduleur (24) du côté de la machine et est constituée pour mettre à disposition, à la borne du côté de la machine, un signal de commande de machine pour commander l'onduleur (24) du côté de la machine, l'unité (26) de commande étant constitué pour

- déterminer une proportion de courant de machine rapportée au couple à partir des courants électriques de la machine (12, 46) électrique,
- détecter une valeur réelle d'un flux magnétique,
- déterminer une valeur réelle d'un couple de la machine (12, 46) électrique en combinant le flux magnétique relevé à la proportion de courant de machine rapportée au couple,
- déterminer une différence de couple entre la valeur réelle et une valeur de consigne du couple de la machine (12, 46) électrique,
- filtrer la différence de couple au moyen d'un filtre (28) à bande passante qui est accordé à une fréquence propre du côté de la machine,
- déterminer un signal (30) de compensation en traitant un signal (32) de sortie du filtre (28) à bande passante, et
- superposer le signal (30) de compensation au signal de commande de réseau et/ou au signal de commande de la machine,

**caractérisée en ce que**
l'unité de commande est constituée de manière à ce que le traitement du signal (32) de sortie du filtre (28) à bande passante comprenne une transformation au moyen d'une transformation de Park, afin de déterminer une composante d et une composante q, pour déterminer des moyennes de la composante d et de la composante q pour régler à zéro les valeurs moyennes au moyen d'un régleur (34, 36) PI et pour déterminer, par transformation de Park inverse, le signal (30) de compensation.

8. Produit de programme d'ordinateur comprenant un programme pour une unité d'ordinateur ayant une partie de code de programme d'un programme pour effectuer les stades d'un procédé suivant l'une des revendications 1 à 6, lorsque le programme est réalisé par l'unité d'ordinateur de l'unité de commande suivant la revendication 7, de manière à ce que l'unité d'ordinateur détermine au moins un signal de compensation se superposant au signal de commande de réseau et/ou au signal de commande de la machine.

9. Produit de programme d'ordinateur suivant la revendication 8, **caractérisé en ce que** le produit de programme d'ordinateur comprend un support déchiffrable par ordinateur sur lequel les parties de code de programme sont mises en mémoire.

FIG 1

FIG 2

FIG 3

FIG 4

FIG 5

FIG 6

$I_{mot}$, $f_\varphi$, $\varphi_{Ist}$, $M_{soll}$, Netz-PLL-Winkel, $f_\varphi$, $f_N$, $f_{mot}$

26, 74, 78, 38, 28, 32, 76, 30, 40, 34, 36, 70, 72, 42, 68, d, q, 0, −1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10200011079995 A1
- WO 2006113230 A1
- EP 2073375 A1
- DE 102011079995 A1
- DE 102004030974 A1